Europäisches Patentamt

European Patent Office

Office européen des brevets

(19)

(11) Numéro de publication : **0 631 127 A1**

(12) # DEMANDE DE BREVET EUROPEEN

(21) Numéro de dépôt : **94401422.4**

(22) Date de dépôt : **23.06.94**

(51) Int. Cl.⁵ : **G01N 21/55**

(30) Priorité : **24.06.93 FR 9307676**

(43) Date de publication de la demande :
**28.12.94 Bulletin 94/52**

(84) Etats contractants désignés :
**AT CH DE FR GB IE IT LI SE**

(71) Demandeur : **ETAT FRANCAIS, Représenté par le Délégué Général, pour l'Armement 14, rue St Dominique Paris 7ème (FR)**

(72) Inventeur : **Therasse, Joel**
**26, rue Lavoisier**
**F-91710 Vert le Petit (FR)**
Inventeur : **Binder, Patrice**
**22, rue Lavoisier**
**F-91710 Vert le Petit (FR)**
Inventeur : **Collino, Roberta**
**34, rue du Chemin Creux**
**F-91340 Ollainville (FR)**
Inventeur : **Boilot, Jean-Pierre**
**20 Avenue du Maréchal de Lattre de Tassigny**
**F-92360 Meudon la Forêt (FR)**
Inventeur : **Chaput, Frédéric**
**8 avenue Nationale**
**F-91300 Massy (FR)**
Inventeur : **Levy, Yves**
**35 rue Savier**
**F-92240 Malakoff (FR)**

(54) **Procédé de détection et/ou d'identification d'espèces chimiques ou biologiques à l'aide d'un guide d'onde de type "Sol-Gel".**

(57)    La présente invention concerne un procédé et un dispositif de détection et/ou d'identification d'une espèce chimique ou biologique, appelée ligand, dans un milieu liquide ou gazeux, dispositif comportant de façon connue une source de rayonnement (1) produisant un faisceau (2) monochromatique collimaté, une cellule recevant le faisceau (2) de façon à produire une réflexion totale interne et comportant notamment un guide d'onde (16), et un détecteur de rayonnement (3), et caractérisé en ce que la cellule (10) comporte un substrat transparent au faisceau (2) et revêtu sur l'une de ses faces d'une première couche (15) composée d'un film métallique et d'une deuxième couche (16) composée d'un polymère constituant un guide d'onde et où sont fixés des récepteurs appropriés.

FIG. 4

EP 0 631 127 A1

La présente invention concerne le domaine de la recherche ou de l'analyse de matériaux par l'utilisation de moyens optiques, et plus particulièrement un procédé et un dispositif de détection et/ou d'identification d'une espèce chimique ou biologique dans un milieu liquide ou gazeux.

A toutes fins utiles, on rappelera qu'un récepteur est, par convention, une architecture moléculaire immobilisée capable de lier de manière sélective et/ou spécifique une espèce chimique ou biologique libre, appelée ligand.

On inclut dans les espèces biologiques toutes les cellules, y compris les micro-organismes et virus, qui peuvent se lier de manière spécifique à un récepteur ou être reconnues de manière spécifique par un ligand grâce à des récepteurs appelés communément marqueurs et servant par exemple au typage de ces cellules, micro-organismes ou virus.

La détection d'une espèce chimique ou biologique peut être effectuée à l'aide de réactifs doués d'affinité pour ces substances. Par exemple, les méthodes fondées sur la réaction antigène-anticorps sont bien connues. Généralement ces méthodes nécessitent des temps de réaction importants et la mise en évidence de la liaison récepteur-ligand est indirecte, nécessitant plusieurs étapes. Elle se fait par exemple à l'aide de marqueurs radioactifs ou fluorescents, par précipitation ou encore au moyen d'une réaction enzymatique adaptée.

La détection d'une espèce chimique ou biologique libre dans un milieu, espèce appelée ligand, peut aussi être effectuée à l'aide d'un récepteur doué d'affinité avec le ligand et en utilisant des moyens optiques comprenant notamment une source de rayonnement, un guide d'onde en partie recouvert d'un revêtement dans lequel est inséré le récepteur, et un détecteur, les liaisons récepteur-ligand étant mises en évidence en analysant les variations d'indices de réfraction et/ou d'épaisseur provoquées par ces liaisons à l'interface revêtement-solution et/ou dans le revêtement, en utilisant les propriétés de l'onde évanescente générée en configuration de réflexion totale interne (TIR) à l'interface du guide d'onde et du revêtement.

Le brevet US 4050895 décrit un dispositif du type précité dans lequel le guide d'onde est une fibre optique et le détecteur mesure l'intensité du rayonnement sortant de cette fibre après de multiples réflexions à l'intérieur de celle-ci, cette intensité étant fonction de la composition du revêtement et notamment du nombre de liaisons récepteur-ligand.

D'autre part il est connu, pour détecter des espèces biologiques, d'utiliser un dispositif comportant une source de rayonnement, une cellule relevant le faisceau de façon à produire une réflexion totale interne et incluant notamment un guide d'onde, un détecteur de rayonnement, cette cellule comportant un substrat transparent au faisceau et revêtu sur l'une de ses faces d'une première couche composée d'un film métallique et d'une deuxième couche composée d'un polymère où sont fixées des molécules appropriées. Le détecteur mesure la valeur de l'intensité du faisceau réfléchi par le film métallique.

Cependant ces dispositifs sont complexes et leur mise en oeuvre, mal aisée. De plus, la sensibilité du dispositif optique laisse à désirer, à cause notamment des propriétés physico-chimiques de la couche de polymère (cinétique d'adsorption des molécules de ligand) et de l'inaptitude de cette couche à supporter des modes de propagation transverse électrique et transverse magnétique.

Le but de l'invention est de remédier à ces inconvénients en proposant notamment un procédé, simple et sensible, et un dispositif associé présentant une sensibilité optimale, dispositif de détection et/ou d'identification d'une espèce chimique ou biologique capable de se combiner avec un récepteur, fondé sur des mesures de l'intensité d'un rayonnement réfléchi sur un guide d'ondes particulier.

Selon l'invention, un dispositif de détection d'une espèce chimique ou biologique libre dans un milieu, espèce que l'on appelera ligand, comportant de façon connue une source de rayonnement produisant un faisceau monochromatique collimaté, une cellule recevant le faisceau de façon à produire une réflexion totale interne et comportant notamment un guide d'onde, et un détecteur de rayonnement, est caractérisé en ce qu'il comporte en outre un second détecteur de rayonnements ainsi que des moyens de séparation des deux composantes transverse électrique et transverse magnétique du faisceau réfléchi.

Selon une caractéristique supplémentaire, le dispositif de détection est caractérisé en ce que les moyens de séparation comportent un prisme de Wollaston.

Selon une caractéristique, un dispositif selon l'invention est caractérisé en ce que la cellule comporte un substrat transparent au faisceau et revêtu sur l'une de ses faces d'une première couche composée d'un film métallique et d'une deuxième couche composée d'un polymère.

Selon une caractéristique supplémentaire, un procédé d'obtention d'une telle cellule est caractérisé en ce qu'il consiste à:
- obtenir un gel en réalisant une hydrolyse complète d'alcoolates, dont une partie au moins comportent des fonctions actives, par une solution acide aqueuse, suivie d'une polycondensation des produits hydrolysés,
- déposer une couche mince de gel ainsi produit sur un film métallique recouvrant une surface du substrat,
- traiter thermiquement le substrat revêtu du film métallique et de la couche mince de gel.

Selon une autre caractéristique, le procédé d'obtention de la cellule est caractérisé en ce qu'au moins une partie des alcoolates a pour formule R'z-Si-$(OR)_4$-z où R est un groupement alkyle ayant 1 à 7 atomes de carbone, R' est au moins un groupement organique non hydrolisable (comme par exemple un groupement alkyl ayant 1 à 7 atomes de carbone ou un groupement phényle) portant une ou plusieurs fonctions chimiques actives: OH, $NH_2$, OCN, SH, COOH, COOR.

Selon une caractéristique supplémentaire, le procédé d'obtention de la cellule est caractérisé en ce qu'une seconde partie des alcoolates a pour formule M-$(OR)_x$, où M représente au moins un élément choisi parmi le silicium, le zirconium IV, le titane IV, l'aluminium et R un groupement alkyl ayant 1 à 7 atomes de carbone.

Selon une caractéristique supplémentaire, le procédé d'obtention de la cellule est caractérisé en ce qu'une autre partie des alcoolates a pour formule R'z-Si-$(OR)_4$-z où R est un groupement alkyle ayant 1 à 7 atomes de carbone, R' est au moins un groupement organique non hydrolisable (comme par exemple un groupement alkyl ayant 1 à 7 atomes de carbone ou un groupement phényle) portant ou non une ou plusieurs fonctions chimiques actives: OH, $NH_2$, OCN, SH, COOH, COOR.

Selon une autre caractéristique, le procédé d'obtention de la cellule est caractérisé en ce que le film métallique est déposé sur le substrat par évaporation sous vide.

Dans la suite de la description, on fera souvent référence, à titre d'exemple et par commodité, au système antigène-anticorps. Cette restriction est purement conventionnelle et ne doit bien entendu pas être considérée comme limitative du champ potentiel d'application de ladite invention.

D'autres avantages et caractéristiques de la présente invention apparaîtront dans la description d'une variante de réalisation en regard des figures annexées parmi lesquelles:

- la figure 1 présente le schéma d'un dispositif selon un mode de réalisation,
- la figure 2 présente une courbe de réflectivité obtenue avec ce mode de réalisation,
- la figure 3 présente deux courbes de réflectivité, correspondant à deux milieux différents.
- la figure 4 présente un schéma d'une variante du mode de réalisation,

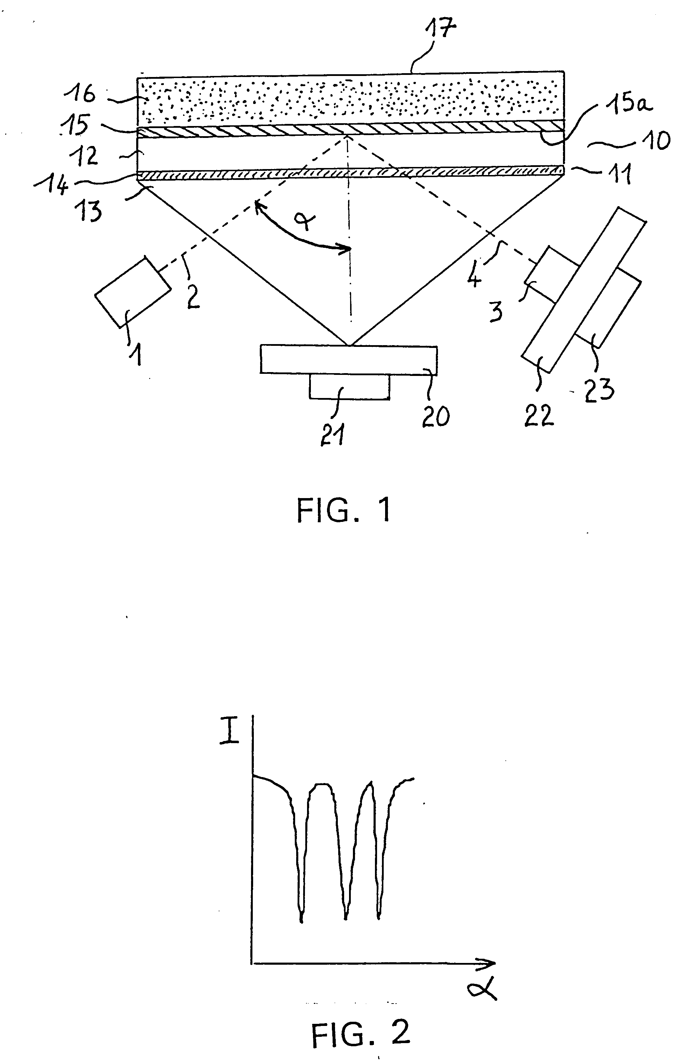

La figure 1 présente un dispositif de détection d'une espèce chimique ou biologique libre, appelée ligand, dans un milieu susceptible de la contenir selon l'invention. Ce dispositif comporte principalement une source de rayonnements 1 produisant un faisceau monochromatique collimaté 2, un détecteur de rayonnement 3 ainsi qu'une cellule 10.

Cette cellule 10 est composée, d'un substrat 11 comportant une lame de verre 12 et un prime 13 séparés par un film d'huile ou de gel 14, d'un film métallique 15, et d'une couche mince 16 d'un polymère constituant un guide d'onde, sur laquelle sont fixés des récepteurs, non représentés, ayant des affinités avec le ligand.

Dans la suite du texte, la couche mince 16 d'un polymère constituant un guide d'onde, sur laquelle sont.fixés des récepteurs, sera appelée le polymère.

Le prisme 13, le film 14 et la lame de verre 12 ont sensiblement le même indice de réfraction de façon à ce que la faisceau incident 2 ne subisse aucune déviation ni réflection avant d'atteindre la surface 15a du film métallique 15.

Le prisme 13 est positionné sur un plateau tournant 20 piloté par un moteur pas à pas 21 permettant, par exemple d'effectuer des rotations par incrémentation de 1/100 de degré.

Le détecteur 3 est une photodiode positionnée sur un plateau tournant 22 piloté en rotation sur quelques degrés par un moteur pas à pas 23.

Les éléments 20 à 23 permettent de faire varier l'angle d'incidence a entre le faisceau 2 et la surface 15a du film métallique. Les moteurs 21 et 23 sont asservis de telle façon que la photodiode 3 intercepte le faisceau réfléchi 4 quelle que soit la position angulaire possible du plateau tournant 22.

La surface externe 17 du polymère est susceptible d'être mise en contact avec ledit milieu via des moyens connus 18.

Le film métallique 15 est, par exemple, un film d'or ou d'argent d'épaisseur voisine de 50nm déposé sur la surface 12a de lame de verre 12 par évaporation sous vide.

Dans ce mode de réalisation, le polymère 16 est préparé par un procédé du type sol-gel. Ce procédé permet l'obtention de couches minces amorphes possédant des fonctions chimiques actives (OH, $NH_2$, OCN, SH, COOH, COOR ...) sur lesquelles peuvent se greffer des récepteurs.

La méthode sol-gel est une technique d'élaboration de matériaux de type oxyde à basse température. Qualifiée de chimie douce, sa mise en oeuvre est faite en phase liquide, ce qui assure aux produits finaux une grande homogénéité et rend la mise en forme aisée (monolithe, fibre, couche, poudre). Après réaction et passage à l'état solide, la densification nécessite un traitement à une température relativement basse, voire dans certains cas à température ambiante.

La synthèse par voie sol-gel s'initie généralement à partir d'alcoolates de formule M-$(OR)_x$, où M est l'ion, souvent métallique, de l'oxyde à réaliser et R une chaîne carbonée. Il existe également des alcoolates présentant des groupements organiques non réactifs ($CH_3$-Si-$(OR')_3$). En solution alcoolique et en présence d'eau, ces produits peuvent subir différentes réactions que nous allons décrire dans le cas précis des alcoolates de silicium :

- Hydrolyse :
    $\equiv$Si-OR + $H_2O$ ---> $\equiv$Si-OH + ROH

Réaction au mécanisme activé par catalyse acide ou basique, elle présente une vitesse minimale à pH7.

- Condensation :

$$\equiv Si-OH + HO-Si \equiv ---> \equiv Si-O-Si \equiv + H_2O$$

Ici, la vitesse de réaction est minimale vers pH2-3. A des valeurs de pH élevées, la réversibilité de cette réaction devient importante. Par modification du pH, il est donc possible d'observer des comportements très différents : en milieu basique, la croissance de particules de silice denses est dominante. Celles-ci, chargées négativement et de taille pouvant atteindre 0,1 μm, ne s'agrègent pas et se trouvent en suspension dans les solvants (sol). Par addition de sels ioniques, il est possible d'écranter ces interactions coulombiennes et de permettre la déstabilisation du sol : les particules vont alors d'agréger pour former un réseau tridimensionnel solide : le gel. En milieu acide, la croissance des particules denses est restreinte, la taille de celles-ci ne dépasse guère 1-2 nm. On observe ensuite la croissance par agrégation d'amas de faible densité, ceux-ci occupant une fraction volumique de plus en plus importante, jusqu'à ce que cette dernière approche l'unité. Le liquide devient alors visqueux, et finit par se figer : c'est la gélification. Le gel solide ainsi obtenu est transparent, d'aspect vitreux. Il est en fait constitué d'un réseau de polymère de silice emprisonnant le solvant.

Après obtention du gel, il faut procéder à l'opération de séchage pour éliminer les quantités importantes de solvant :

- soit dans des conditions classiques en étuve, auquel cas les pressions importantes dues au déplacement de l'interface liquide-vapeur dans les pores causent l'effondrement de la structure poreuse,
- soit dans des conditions hypercritiques en autoclave, auquel cas on obtient un solide poreux.

L'élaboration du polymère comprend les étapes suivantes :

a) la solution de départ est formée d'un ou plusieurs alcoolates en présence d'un alcool à chaîne courte.

Les alcoolates sont :

- au moins un alcoolate de formule $R'_z$-Si-$(OR)_{4-z}$ où R est un groupement alkyl ayant 1 à 7 atomes de carbone. R' est au moins un groupement organique non hydrolysable (comme par exemple un groupement alkyl ayant 1 à 7 atomes de carbone ou un groupement phényle) portant une ou plusieurs fonctions chimiques actives : OH, $NH_2$, OCN, SH, COOH, COOR... Citons par exemple :
3-Aminopropyltriéthoxysilane $H_2NCH_2CH_2CH_2Si(OEt)_3$ ou APTES 3-Isocyanatopropyltriéthoxysilane $OCNCH_2CH_2CH_2 Si(OEt)_3$

ou ICPTES3-Mercaptopropyltriéthoxysilane $HSCH_2CH_2CH_2Si(OEt)_3$ ou MPTESAminophenyltriméthoxysilane $H_2N\phi Si(OMe)_3$ ou A$\phi$TMS3-Aminopropylmethyl diethoxysilane $H_2NCH_2CH_2CH_2SiMe(OEt)_2$ ou APMDES Mercapto-méthyl-méthyldiéthoxysilane $HSCH_2SiMe(OEt)_2$ ou MMMDES

- un alcoolate de formule M-$(OR)_x$, où M représente au moins un élément choisi parmi le silicium, le zirconium IV, le titane IV; l'hafnium IV et l'aluminium et R un groupement alkyl ayant 1 à 7 atomes de carbone.
- un alcoolate de formule $R''_z$-Si-$(OR)_{4-z}$ où R est un groupement alkyl ayant 1 à 7 atomes de carbone. R'' est au moins un groupement organique non hydrolysable (comme par exemple un groupement alkyl ayant 1 à 7 atomes de carbone ou un groupement phényle ou un groupe vinyle).

Citons par exemple :
Méthyltriéthoxysilane $MeSi(OEt)_3$ ou MTEOS
Vinyltriéthoxysilane $CH_2CHSi(OEt)_3$ ou VTEOS
Phenyltriéthoxysilane $\phi Si(OEt)_3$ ou $\phi$TEOS

b) on réalise un hydrolyse complète du ou des alcoolates par une solution aqueuse acide (le pH est fixé par addition d'un acide minéral).

c) l'activité acido-basique est alors partiellement ou totalement neutralisée par addition d'une solution aqueuse basique.

d) le liquide obtenu est déposé en couche mince sur un substrat (verre, silicium, silice amorphe, métal ...) en utilisant par exemple la technique de la tournette.

e) le film est séché à l'air ou dans des conditions hypercritiques (par exemple à température de 250°C et pression de 70 bars) et éventuellement recuit à l'air à une température inférieure à 500°C.

*Exemples :*

Exemple 1

Les réactifs de départ sont les suivants :
- 0,05 moles de Mercapto-méthyl-méthyldiéthoxysilane $HSCH_2SiMe(OEt)_2$.
- 11,2 cm³ d'éthoxyde de silicium $(Si(OC_2H_5)_4$ ou tétraéthoxysilane soit 0,05 mole.
- 18 cm³ d'eau, soit 1 mole, dont le pH est ajusté à 2,5 par addition d'acide chlorhydrique.
- 35 cm³ d'éthanol soit 0,6 mole.

Les différents constituants sont versés, à l'air libre, dans un flacon, avec agitation magnétique. Après 30 minutes, l'activité acido-basique de la solution est partiellement neutralisée par addition de 10-4 mole d'ammoniac. Après une heure, on obtient un liquide visqueux qui est déposé en couche mince sur un substrat de verre, en utilisant la technique de la tournette. L'épaisseur de la couche de polymère est de 6μm après un séchage de quelques heures à l'air.

## Exemple 2

On opère comme à l'exemple 1, mais en utilisant comme alcoolates de départ 0,05 mole de Méthyltriéthoxysilane MeSi(OEt)$_3$ et 0,05 mole de 3-Aminopropyltriéthoxysilane H$_2$NCH$_2$CH$_2$CH$_2$Si(OEt)$_3$. Le liquide obtenu est déposé en couche mince sur un substrat de verre, en utilisant la technique de la tournette. L'épaisseur de la couche de polymère film sec est de 5μm.

## Exemple 3

On opère comme à l'exemple 1, mais en utilisant comme alcoolate de départ 0,1 mole de 3-Aminopropyltriéthoxysilane H$_2$NCH$_2$CH$_2$CH$_2$Si(OEt)$_3$. La couche de polymère obtenue a une épaisseur de 3μm et un indice optique de 1,4876 (633nm) (mesures de réflectivité).

## Exemple 4

On opère comme à l'exemple 1, mais en utilisant comme alcoolate de départ 0,1 mole de 3-Isocyanatopropyltriethoxysilane 3-OCNCH$_2$CH$_2$CH$_2$Si(OEt)$_3$.

Les récepteurs peuvent être fixés sur la couche de polymère 16 ainsi préparée, soit par simple adsorption : on connaît par exemple les propriétés adsorbantes des silanes fonctionnalisés qui sont largement utilisés en chromatographie, soit par covalence en utilisant un agent de couplage bifonctionnel capable de réagir à la fois avec les groupements fonctionnels de la couche de polymère et avec le ligand. Dans ce dernier cas les récepteurs sont immobilisés à l'intérieur et/ou à la surface de la couche de polymère 16.

S'il s'agit de coupler un polymère 16 et un récepteur possédant chacun des groupements aminés, il est possible d'utiliser, par exemple, des agents homobifonctionnels tels que le glutaraldéhyde ou des bisimidoesters comme le diméthylpimélimidate (DMP). Si, au contraire les deux groupements à ponter sont différents il convient d'utiliser des agents hétérobifonctionnels :
- Par exemple, pour un pontage SH/NH2 :

      Les imidoesters comme le 2-iminothiolane

      Les N-hydroxysuccinimide esters comme le N-succinimidyl 3-(2-pyridlyldithio)propionate (SPDP).
- Pour un pontage NH2/COOH, peuvent être cités :

      Les carbodiimides

      L'isobutylchloroformate (IBCF)

      Le N-éthylbenzisoxazolium fluoroborate (EBIZ)

*Exemples :*

## Exemple 1

Pour un polymère 16 contenant de l'APTES c'est-à-dire des groupements NH2, le protocole suivant peut être envisagé pour l'immobilisation d'une immunoglobuline :
- La lame supportant la couche mince de sol-gel est incubée à température ambiante avec un solution de glutaraldéhyde à 1 % en tampon phosphate 0,1M pH6,8 pendant 24 heures.
- Après rinçage, la lame est immergée dans la solution contenant l'anticorps à 0,1 mg/ml en tampon phosphate 0,1M pH6,8, et incubée à température ambiante pendant 24 heures.
- La lame ainsi obtenue est rincée et peut être conservée en tampon phosphate 0,1M pH6,8 à + 4°C.

## Exemple 2

Pour un polymère 16 support sol-gel contenant du MPTES c'est-à-dire des groupements SH, le protocole est semblable à celui utilisé dans l'exemple 1:
- La lame supportant la couche mince de sol-gel est incubée à température ambiante avec un solution de SPDP 20 mM en tampon en tampon phosphate 0,1M-NaC10,1M pH7,5 pendant 24 heures.
- Après rinçage, la lame est immergée dans la solution contenant l'anticorps à 0,1 mg/ml en tampon phosphate 0,1M-NaC10,1M pH7,5 pendant 24 heures.
- La lame ainsi obtenue est rincée et peut être conservée en tampon phosphate 0,1M pH6,8 à + 4°C.

Le fonctionnement du dispositif est le suivant :

Le faisceau lumineux 2 collimaté, monochromatique dont la polarisation est Transverse Electrique (T.E.) ou Transverse Magnétique (T.M.) traverse le prisme 13, le film d'huile 14 et la lame 12, se réfléchit sur la surface métallique 15a et parvient à la photodiode 3 placée à la sortie du prisme 13. Pour un ou plusieurs angles d'incidence α, la lumière incidente pénètre dans le polymère 16 sous forme de mode guidé. L'excitation d'un mode guidé dans le polymère est révélée par la présence d'un minimum d'intensité du faisceau réfléchi 4.

La mesure de la valeur I de cette intensité, pour des valeurs d'angles d'incidence subissant après chaque mesure une incrémentation d'un centième de degré, permet de construire une courbe du type de celle représentée à la figure 2. Dans le cas d'un polymère 16 susceptible de propager trois modes guidés, on observera la présence de trois minima sur la courbe de réflectivité. Les positions angulaires de ces minima de réflectivité sont sensibles à toute modification superficielle pouvant apparaître à la surface du guide d'ondes. Ainsi, par exemple, si le milieu extérieur est constitué d'une solution tampon contenant des anticorps susceptibles d'être adsorbés sur la surface du guide, on observera un déplacement des pics de réflectivité dont la valeur I est directement liée au nombre d'anticorps fixés. De même, si l'indice de la solution change, on pourra déterminer sa valeur par la mesure du déplacement angulaire. On notera que le sens du décalage angulaire traduit une augmentation ou une diminution du paramètre ayant provoqué ce déplacement. L'adsorption ou la désorption des molécules biologiques sur la surface du guide constitue un exemple. Ce dispositif permet donc de suivre les cinétiques d'adsorption et de désorption des molécules fixées au cours du temps.

La mise en oeuvre du dispositif précédemment décrit est le suivant :

Sur la surface 17 du polymère 16 est plaquée une cuve 18 munie de deux ouvertures permettant une mise en contact manuelle ou automatisée du milieu avec le polymère 16 sur/dans lequel sont greffés les récepteurs. Les pics de réflectivité (TE et TM) sont enregistrés en fonction de l'angle d'incidence α avant cette mise en contact. Cette opération est réalisée en disposant le prisme 13 sur le plateau tournant 20 puis en pilotant la rotation de ce dernier par incrémentation avec le moteur pas à pas 21, ainsi que celle du plateau 22 avec le moteur 23. Une incrémentation de 1/100 de degrés est largement suffisante pour mesurer la position angulaire des minima. Après la mise en contact du polymère 16 avec le milieu, la mise en oeuvre du dispositif peut être réalisée de deux manières différentes :

- la première consiste à travailler à une incidence située sur l'une des deux parties linéaires 25 et 26 d'un pic de réflectivité 27, et à mesurer la variation de l'intensité réfléchie, éventuellement en fonction du temps. Ce dernier mode de fonctionnement est utilisé lorsque l'on souhaite suivre la cinétique de fixation d'une couche en formation. L'adsorption des anticorps-antigènes correspond à ce type d'expériences où les molécules biologiques s'accrochent à la surface au cours du temps. De façon similaire, les cinétiques de désorption peuvent être enregistrées.

- la seconde consiste à enregistrer à nouveau la réflectivité en fonction de l'angle d'incidence. Ce mode est utilisé à toutes les étapes de la formation du complexe anticorps/antigène après chaque relevé de la cinétique d'adsorption/désorption. La comparaison des différentes courbes de réflectivité obtenues après chaque étape, permet d'évaluer l'importance de la fixation des molécules. L'accord des courbes expérimentales avec les modèles théoriques permet de quantifier les propriétés optiques des couches adsorbées. Un modèle théorique approché fournit le nombre de molécules fixées.

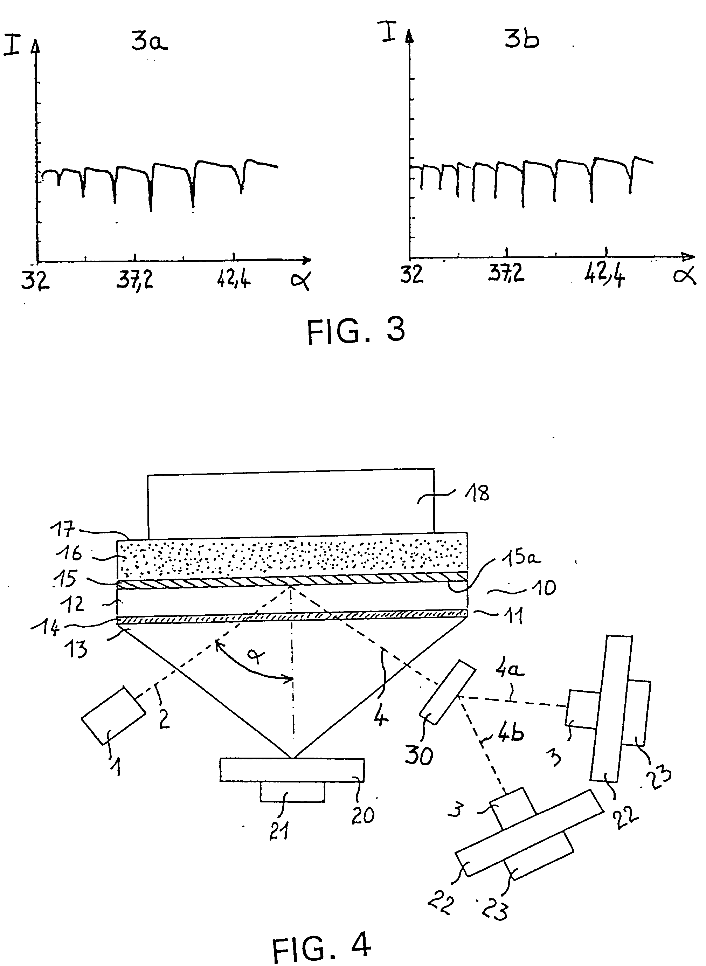

Le milieu dans lequel est susceptible de se trouver le ligand peut être liquide ou gazeux. Deux courbes de réflectivité, l'une avec un milieu constitué par de l'air et l'autre avec un milieu constitué par de l'eau, sont présentées respectivement en figure 3a et 3b. Elles ont été réalisées avec un dispositif selon l'invention dans lequel la couche de polymère est constituée de APMDES+MTEOS (Méthyl - amino - propyl - diéthoxysilane + méthyl - triéthoxysilane).

La sensibilité du dispositif peut être améliorée si la couche de polymère est conçue pour pouvoir supporter un mode de propagation T.E. et un mode T.M.. Ceci est obtenu en réalisant une couche de polymère 16 d'épaisseur faible. L'intérêt de disposer de deux modes de propagation permet de suivre séparément l'évolution de la concentration et de l'épaisseur de la couche superficielle en formation. La figure 4 présente un dispositif, selon l'invention, permettant de traiter les deux modes de propagation. Ce dispositif comporte les éléments précédemment cités ainsi qu'un prisme de Wollaston 30 et un deuxième détecteur 3, en l'occurrence, une deuxième photodiode.

Le fonctionnement de ce dispositif est le suivant :

Le faisceau incident monochromatique collimaté est polarisée à 45° du plan d'incidence. Après réflexion sur le film métallique, la partie réfléchie du faisceau lumière réfléchie traverse un prisme de Wollaston 30 dont le rôle est de séparer angulairement les deux composantes transverse électrique 4a et transverse magnétique 4b. Ainsi séparés, les deux faisceaux sont enregistrés par deux photodiodes.

La sensibilité du dispositif optique peut aussi être considérablement améliorée si le polymère bimode est dopé par un composé, tel le titane, permettant d'augmenter l'indice de réfraction sans réduire la fonctionnalité de la surface du guide.

En outre, la sensibilité des mesures est fonction d'une part de l'épaisseur relative de la couche de polymère 16 greffée par des récepteurs et de celle du ligand, d'autre part de la variation d'indice entraînée par la fixation du ligand sur le récepteur. D'une manière générale la variation d'épaisseur est le phénomène qui engendre la plus grande variation du signal. Il est possible dans certains cas d'augmenter la sensibilité du système à l'aide de divers artifices basés sur le principe d'empilement. Par exemple, lorsque le ligand comporte plusieurs sites de liaison d'affinité, on peut ajouter un second ligand qui viendra se fixer à son tour sur les sites d'affinité encore libres du premier ligand qui fonctionnera alors comme récepteur. Ce second ligand peut être fixé successivement ou simultanément à la fixation du premier ligand. Le second-ligand peut être identique ou non au récepteur immobilisé sur le polymère . Ce second ligand peut lui-même être couplé à une macromolécule ou une particule capables de se maintenir en suspension dans un milieu liquide.

Le liquide vecteur des ligands peut être toute solution tampon compatible avec le système utilisé. Le pH du milieu liquide peut être compris entre 2 et 11. Les interactions non spécifiques par échange d'ions ou par interactions hydrophobes peuvent être combattues par des tampons de force ionique appropriée contenant éventuellement des détergents utilisés classiquement à cet effet.

La mesure peut être réalisée, par exemple pour la détection des protéines, par reconnaissance directe à l'aide d'un anticorps spécifique greffé sur la phase solide. Une amplification telle que décrite ci-dessus peut ou non être réalisée, par exemple à l'aide d'un second anticorps.

Pour mesurer une concentration de petites molécules (haptène) la méthode dite par compétition peut être préférable. Elle peut être réalisée, par exemple, en greffant l'haptène sur le polymère 16 par l'intermédiaire d'un agent chimique de couplage. Il joue alors le rôle de récepteur. Le ligand sera représenté, par exemple, par un anticorps spécifique de l'haptène et présent dans la phase liquide le contenant. L'affinité de ce ligand pour le récepteur sera d'autant plus faible que l'haptène libre sera concentré. Cela se traduira donc par un signal d'autant plus important que la concentration en haptène libre sera faible.

Une méthode équivalente et inverse consistant à greffer un anticorps et à utiliser un haptène conjugué à une macromolécule ou une grosse particule peut également être utilisée. La compétition est alors réalisée simultanément ou successivement entre l'haptène conjugué de concentration connue et l'haptène libre inconnu.

Cette méthode est particulièrement adaptée à la caractérisation de cellules, de micro-organismes ou de virus et à leur typage en raison de leur taille qui peut entraîner des variations importantes du signal à analyser. Les domaines d'application recouvrent donc notamment, par exemple, l'ensemble des méthodes de caractérisation antigéniques et épitopiques de cellules, de micro-organismes ou de virus, de protéines ou d'haptènes.

La méthode proposée est également applicable à un capteur régénérable, le récepteur pouvant être réactivé par une méthode appropriée qui consiste, par exemple, à laver successivement la surface 17 du polymère 16 avec une solution acide puis avec une solution destinée à rééquilibrer cette surface pour une nouvelle utilisation.

Un dispositif selon l'invention se prête bien à des déterminations multiples sur un seul échantillon, que ce soit par exemple pour la recherche d'anticorps, d'antigène ou d'haptène ou pour le typage cellulaire. Toutes ces investigations peuvent être effectuées simultanément, et en quelques minutes, grâce à une surface composée d'une mosaïque de plaquettes support de la couche de polymère, et correspondant aux ligands à rechercher ou à doser. Une ou plusieurs plaquettes témoins sont destinées à évaluer le niveau du bruit de fond.

En plus des exemples d'application déjà mentionnés, on peut ajouter l'application d'un dispositif selon l'invention pour la détection de micro-organismes pathogènes dans un échantillon résultant d'un prélèvement biologique, de l'environnement ou de toute autre nature.

Un autre exemple très important d'application concerne la mise en évidence d'hybridation d'une sonde nucléique sur sa cible. Du fait de la taille des ADN et ARN, une variation de signal importante peut être attendue après hybridation entre un oligonucléotide fixé sur le polymère (sonde) et l'acide nucléique portant la séquence complémentaire (cible). Le signal obtenu peut être amplifié de manière analogue à l'amplification décrite pour un système antigène-anticorps, une deuxième sonde elle-même conjuguée à une macromolécule ou une particule pouvant être utilisé.

De nombreuses modifications peuvent être apportées, tout en restant dans le cadre de l'invention. Ainsi des déterminations quantitatives, telle que la détermination de la concentration de ligand dans le milieu, peuvent être réalisées. Pour cela, il suffit d'étalonner le système à l'aide de préparations normalisées, tant en ce qui concerne les surfaces de polymère qu'en ce qui concerne le montage optique et les solutions utilisées, afin d'obtenir une relation entre le déplacement angulaire du pic de réflection et la concentration du ligand dans le milieu. Des quantités connues peuvent alors être dosées de manière reproductible.

**Revendications**

1) Dispositif de détection d'une espèce chimique ou biologique dans un milieu, espèce que l'on appelera ligand, comportant de façon connue une source de rayonnement (1) produisant un faisceau (2) monochromatique collimaté, une cellule (10) recevant le faisceau (2) de façon à produire une réflexion totale interne et comportant notamment un guide d'onde (16), et un détecteur de rayonnement (3), dispositif caractérisé en ce qu'il comporte en outre un second détecteur de rayonnements (3) ainsi que des moyens (30) de séparation des deux composantes transverse électrique et transverse magnétique du faisceau réfléchi (4).

2) Dispositif de détection selon la revendication 1, caractérisé en ce que les moyens (30) comportent un prisme de Wollaston.

3) Dispositif de détection selon les revendications 1 et 2, caractérisé en ce que la cellule (10) comporte un substrat transparent au faisceau (2) et revêtu sur l'une de ses faces d'une première couche (15) composée d'un film métallique et d'une deuxième couche (16) composée d'un polymère.

**4)** Procédé d'obtention d'une cellule (10) comportant un substrat transparent au faisceau (2) et revêtu sur l'une de ses faces d'une première couche (15) composée d'un film métallique et d'une deuxième couche (16) composée d'un polymère, caractérisé en ce qu'il consiste à:

- obtenir un gel en réalisant une hydrolyse complète d'alcoolates, dont une partie au moins comporte des fonctions actives, par une solution acide aqueuse, suivie d'une polycondensation des produits hydrolysés,
- déposer une couche mince de gel ainsi produit sur un film métallique (15) recouvrant une surface (12a) du substrat (11),
- traiter thermiquement le substrat (11) revêtu du film métallique (15) et de la couche mince de gel.

**5)** Procédé d'obtention d'une cellule (10) selon la revendication 4, caractérisé en ce qu'au moins une partie des alccolates a pour formule $R'z\text{-}Si\text{-}(OR)_4\text{-}z$ où R est un groupement alkyle ayant 1 à 7 atomes de carbone, R' est au moins un groupement organique non hydrolysable (comme par exemple un groupement alkyle ayant 1 à 7 atomes de carbone ou un groupement phényle) portant une ou plusieurs fonctions chimiques actives : $OH$, $NH_2$, $OCN$, $SH$, $COOH$, $COOR$.

**6)** Procédé d'obtention d'une cellule (10) selon l'une quelconque des revendications 4 et 5, caractérisé en ce qu'une seconde partie des alcoolates a pour formule $M\text{-}(OR)x$, où M représente au moins un élément choisi parmi le silicium, le zirconium IV, le titane IV, l'aluminium et R un groupement alkyle ayant 1 à 7 atomes de carbone.

**7)** Procédé d'obtention d'une cellule (10) selon l'une quelconque des revendications 4 à 6, caractérisé en ce qu'une autre partie des alcoolates a pour formule $R'z\text{-}Si(OR)_4\text{-}z$ où R est un groupement alkyle ayant 1 à 7 atomes de carbone, R' est au moins un groupement organique non hydrolysable (comme par exemple un groupement alkyle ayant 1 à 7 atomes de carbone ou un groupement phényle) portant ou non une ou plusieurs fonctions chimiques actives : $OH$, $NH_2$, $OCN$, $SH$, $COOH$, $COOR$.

**8)** Procédé d'obtention d'une cellule (10) selon l'une quelconque des revendications 4 à 7, caractérisé en ce que le film métallique (15) est déposé sur le substrat (11) par évaporation sous vide.

FIG. 1

FIG. 2

9

FIG. 3

FIG. 4

Office européen
des brevets

**RAPPORT DE RECHERCHE EUROPEENNE**

Numero de la demande

**EP 94 40 1422**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| Y | SENSORS AND ACTUATORS B, vol.5, 1991, LAUSANNE CH pages 79 - 84 S. LOFAS ET AL 'Bioanalysis with surface plasmon resonance' * abrégé * * page 79, colonne de droite, ligne 15 - ligne 20 * * page 80, colonne de droite, ligne 32 - ligne 42 * * page 81, tableau 1 * * page 81, colonne de droite, ligne 1 - page 82, colonne de droite, ligne 5 * * figures 1,2 * | 1,3 | G01N21/55 |
| Y | US-A-4 482 250 (HIRVONEN) * abrégé * * colonne 4, ligne 56 - ligne 58 * * colonne 4, ligne 64 - colonne 5, ligne 9; figures 1,2 * | 1,3 | |
| A | JAPANESE JOURNAL OF APPLIED PHYSICS, vol.28, no.9, Septembre 1989, TOKYO JP pages 1725 - 1727 X. SUN ET AL 'Experimental studies on biosensing by SPR' * abrégé * * page 1724, colonne de gauche, avant-dernière ligne - page 1726, colonne de gauche, ligne 10 * * figure 1 * | 1,4,5,8 | **DOMAINES TECHNIQUES RECHERCHES (Int.Cl.5)** G01N |

-/--

Le présent rapport a été établi pour toutes les revendications

| Lieu de la recherche | Date d'achèvement de la recherche | Examinateur |
|---|---|---|
| LA HAYE | 27 Septembre 1994 | Thomas, R.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numero de la demande

**EP 94 40 1422**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | SENSORS AND ACTUATORS, vol.17, Mai 1989, LAUSANNE CH pages 297 - 305 J. VAN GENT ET AL 'Chromoionophores in optical ion sensors' * abrégé * * page 302, avant-dernière ligne - page 303, ligne 4; figure 6 * | 1 | |
| A | SENSORS AND ACTUATORS, vol.15, Septembre 1988, LAUSANNE CH pages 11 - 18 P.B. DANIELS ET AL 'Surface plasmon resonance applied to immunosensing' * abrégé * * page 13, ligne 28 - ligne 35 * | 1 | |
| A | SENSORS AND ACTUATORS A, vol.26, Mars 1991, LAUSANNE CH pages 483 - 487 K.T.V. GRATTAN ET AL 'Use of sol-gel techniques for fibre-optic sensor applications' * page 483, colonne de droite, alinéa 3 - page 484, colonne de droite, ligne 3 * | 4-6 | **DOMAINES TECHNIQUES RECHERCHES (Int.Cl.5)** |
| A | THIN SOLID FILMS, vol.160, no.1, Juin 1988, LAUSANNE CH pages 431 - 443 J.P. LLOYD ET AL 'Surface plasmon resonance studies of gas effects in phthalocyanine Langmuir-Blodgett films' * page 432, ligne 3 - ligne 18 * * page 432, dernier alinéa - page 433, ligne 13 * | 1 | |

Le présent rapport a été établi pour toutes les revendications

| Lieu de la recherche | Date d'achèvement de la recherche | Examinateur |
|---|---|---|
| LA HAYE | 27 Septembre 1994 | Thomas, R.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)